# EUROPEAN PATENT SPECIFICATION

(11) **EP 2 308 740 B1**
(45) Date of publication and mention of the grant of the patent: **08.05.2013**
(21) Application number: 10176371.2
(22) Date of filing: 13.09.2010
(51) Int. Cl.: B62B 3/06

(54) **Arrangement for sound and vibration damping for an industrial truck**
Geräusch- und Schwingungs-dämpfung eines Flurförderfahrzeugs
Système d'atténuation de vibrations et de bruits d'un chariot élévateur

(30) Priority: 09.10.2009 SE 0950744
(43) Date of publication of application: 13.04.2011
(73) Proprietor: BT Products AB, 595 81 Mjölby (SE)
(72) Inventor: Sundqvist, Martin, 595 34, Mjölby (SE)
(74) Representative: Börlin, Maria

(56) References cited:
- DE-A1- 2 912 374
- DE-C1- 4 442 288
- FR-A1- 2 929 260
- US-A- 2 367 051
- US-A- 2 423 703

## Description

### BACKGROUND

### Technical area

The present invention relates to an industrial truck according to the preamble of claim 1.

### Prior Art

Trucks essentially of the type described initially operate inter alia in urbanized areas in relation to deliverances of pallet loaded gods to shops. In this respect strict regulations are present of how loud sound, how much disturbing noise, trucks for such uses can give rise to. According to certain regulations the upper limit at night including early mornings is 60 dB and different solutions have been suggested to achieve such damping.

A relatively complicated and by that an expensive solution is disclosed in the German patent publication DE 44 42 288 C1 relating to a fork pallet truck, in which however in spite of this complete consideration has not been taken of the fact that an essential part of the generated noise originates from play in the pallet trucks lifting mechanisms. Thereby is a for displacement of such a pallet trucks wheel intended fork for raising and lowering of load forks provided with damp cushions operating against the respective fork cover plate. The said fork in itself is however not damped but loose in its articulated attachments at the push bar etc. generating vibrations that propagates in the fork pallet truck and generating noise. The said solution is not either suitable for use on existing trucks and presumes an overlaying cover plate at the lift forks.

Another pallet truck is known from US 2423703, where springs aid the lifting of the forks. The springs serve as a cushion or shock absorber in particular when the forks are in the raised position. No sound or vibration damping is mentioned.

The present invention provides a solution of the know device drawbacks.

### SUMMARY OF THE INVENTION

This object is achieved according to the present invention with the industrial truck of claim 1.

Further advantages are achieved with what is stated in the dependent claims.

### BRIEF DESCRIPTION OF THE DRAWINGS

A better understanding of the present invention is achieved through the below following description read together with the annexed figures, were the same details in the different views are denoted with the same reference signs and where
Fig.1 displays a lifting piece with a back portion and lifting forks at an industrial truck viewed from the underside of the forks, for the application of a device according to the present invention;
Fig. 2 displays the piece according to Fig. 1 viewed from the side in a lowered position;
Fig. 3 displays the piece according to Fig. 2 with the essential parts of the existing lift mechanism shaded and in a cut A-A according to Fig. 1;
Fig. 4 displays the piece according to Fig. 3 in a raised position;
Fig. 5 displays the piece according to Fig. 2 viewed from above and in a raised position;
Fig. 6 displays the piece according to for example Fig. 2 viewed in a perspective view inclined from below;
Fig. 7 displays schematically a cut B - B according to Fig. 1;
Fig. 8 displays schematically a detail C according to Fig. 6 in magnification;
Fig. 9 displays schematically a detail D according to Fig. 6 in magnification;
Fig. 10 displays schematically a cut D - D according to Fig. 2;
Fig. 11 displays schematically a cut E - E according to Fig. 4; and
Fig. 12 displays schematically a cut F - F according to Fig. 4.

### DETAILED DESCRIPTION OF THE PREFERRED EMBODIMENTS

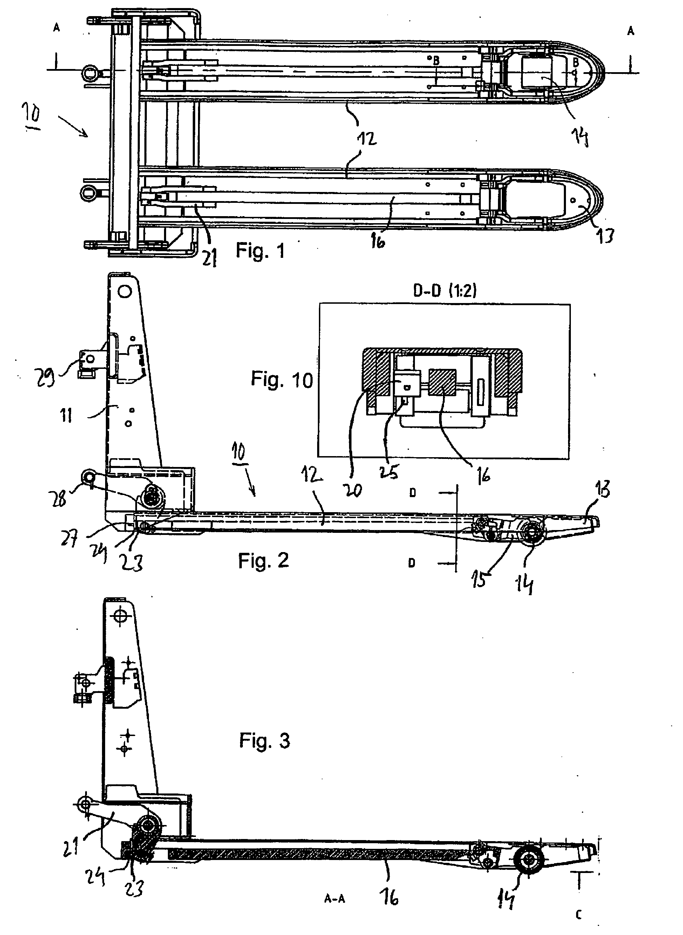

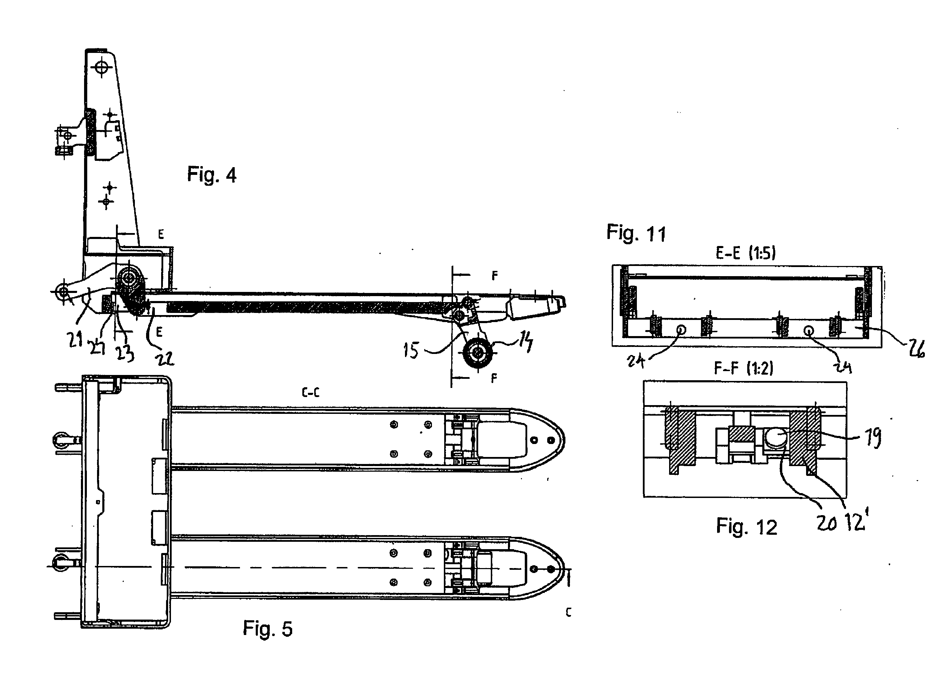

Fig. 1, 2, 5 and 6, discloses among other things a piece 10 for an industrial truck, in this case a tiller arm low lifter, for the application of the present invention, which piece 10 comprises a back portion 11 carrying two between a lowest position, displayed for example in Fig. 2 and 3, and a raised position, displayed for example in Fig.4, raiseable and lowerable lifting forks 12, where each lifting fork close to its free end 13 is provided with at least one wheel 14 for carrying said free end on a base surface and where each lifting fork comprises a wheel yoke 15 for carrying said wheel of the lifting fork.

Further the piece 10 comprises devices, here among other things a pull and push bar 16, for together with the wheel yoke displace said wheel between a first position corresponding to said lowest position and a second position corresponding to said raised position.

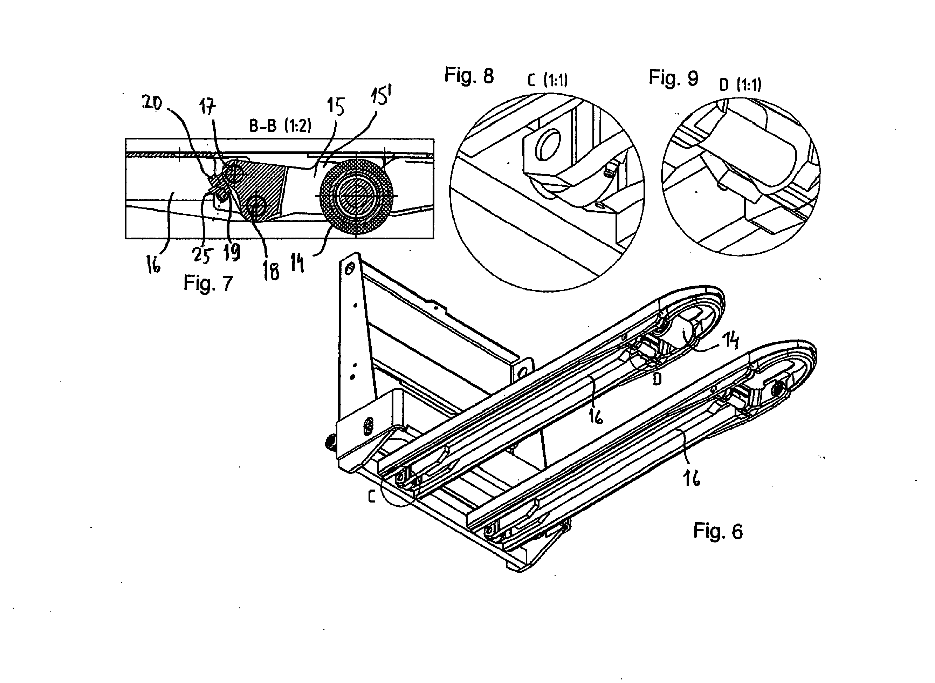

The respective wheel yoke is arranged in its lifting fork, Fig. 7, for example, and respective bar 16 runs in its lift fork as far as the wheel yoke, which is arranged as a slewing bracket and in a joint 17 coupled to the bar, in a joint 18 rotatable attached in the lifting fork an in an end portion 15' carrying wheels 14.

According to the invention the lifting forks comprise at least one damping member 19 each, preferably in the form of a resilient damping body 19, Fig. 7, 10 and 12 for example, arranged to be carried by means of an interiorly arranged attachment 20 and resiliently and dampingly act against the lifting forks wheel yoke with an essentially in the direction of said free end acting spring force when the lifting fork is in the said lowest position, as shown in Fig. 7. The said damping member here constitutes damping and stopping device, against which each wheel yoke is resting, when the lifting forks are in their lowest position, and is affected by a play eliminating spring force, herewith vibrations from the wheels contact with the base surface is prevented from propagating in the lifting fork arrangement.

For each lifting fork is further a pull and push bar yoke 21, Fig. 3 and 4 as an example, rotatably arranged at the back portion and articulately connected to the bar 16 at its against the back portion turned end 22 for acting against the wheel yoke of the lifting fork. According to a preferred embodiment of the present invention the pull bar yoke is arranged by means of a supporting portion 23 to rest against a damping member 24, when the lifting fork is in said lowest position, as displayed for example in Fig. 3.

According to a preferred embodiment the said interiorly in the lifting fork arranged attachment 20 fastened to at least one of the lifting forks opposite sidewalls 12', Fig. 12 for example, in which the damping body has a mounting bolt 25 for fastening to the attachment. A plurality of different, not shown, embodiments of the said damping member can be imaginable to fasten a damping body at its attachment. Thus a mounting bolt can be cast into the damping body. The mounting bolt can upphold a mounting plate or a mounting cup to which the damping body is fastened, for example by means of gluing.

Moreover, according to a preferred embodiment, Fig. 2 and 11 for example, there is on in the back portion arranged attachment 26 for the damping body 24, where in the damping body has a mounting bolt 27 for fastening to the attachment.

The respective damping body 19, 24 is preferably manufactured by a resilient and damping rubber material.

The piece 10 is preferably arranged at a, not shown, drive unit, which in general is provided with wheels and at which the back portion is fastened and comprises a lift cylinder arranged to act between an end 28, shown free in the figures, at the draw bar yoke 21 and an attachment 29 at the back portion for displacement of the bar 16.

In the said lowest position the wheel yoke rests against its damping member, which in addition to acting dampingly acts with a spring force against the wheel yoke and herewith eliminates play in joints etc., which eliminates "chattering" during operation in the said lowest position. According to the described preferred embodiment also the pull bar yoke rests against a damping member in said lowest position, which eliminates play etc. and prevents vibrations to be transferred to the back portion.

When the lifting forks leave the lowest position the damping members are completely disengaged, in which however both wheel yokes and pull bar yokes are loaded in a among other things play eliminating way by means of the load carried by the forks.

The present invention offers a simple and also cost effective solution to the problems with noise from industrial trucks. With simple attachments together with damping members can an existing design be damped.

As the damping not is arranged to act against an overlying cover plate for each lifting fork the present invention can be applied for lifting forks that has discrete lifting lips as supporting surfaces instead of complete covering plates, which in their selves can be noise generating and also gives a higher weight.

Measured under predetermined testing conditions according to a local Dutch method, where a truck is driven on a track with well defined irregularities, the sound from a truck according to the described embodiment and damping of the wheel yokes according to claim 1 been lowered from 60,2 dB to 59 dB, i.e. approximately 2 %, which in this context is an essential lowering.

Above the invention has been described in connection to the preferred embodiments and embodiment examples.

Of course are more embodiments as well as minor changes and completions thinkable without leaving the basic inventive concept defined by the appended claims.

Thus the damping members damping body can be executed with another configuration than cylindrical, which the one displayed as an example, for example parallelepipedic or conical.

The respective damping body is preferably executed by a suitable rubber material, for example styrene rubber, for industrial application in the herewith present form.

A suitable hardness is approximately 60 Shore.

Shown are embodiments with one damping member for each wheel fork. More, for example two, are however thinkable.

The invention are furthermore suitable for other types of trucks and so called pallet trucks with a pivotal handled and lifting section with a back portion and a lifting cylinder and a wheel yoke damped according to the present invention.

## Claims

1. Industrial truck comprising a piece (10) comprising a back portion (11) carrying two lifting forks (12) raiseable and lowerable between a lowest position and a raised position, wherein each lifting fork is provided with at least one wheel (14) close to its free end (13) for carrying said free end on a base surface and wherein each lifting fork comprises a wheel yoke (15) for carrying said wheel of the lifting fork as well as devices for together with the wheel yoke (15) displacing said wheel between a first position corresponding to said lowest position and a second position corresponding to said raised position, the lifting forks (12) comprising first resilient damping members (19), each of which being carried by a first attachment (20) arranged inside the respective lifting fork and acting resiliently upon the lifting fork wheel yoke (15), with a spring force acting essentially in the direction of said free end (13) when the lifting fork is in said lowest position
**characterised in that** when the lifting forks leave the lowest position the damping members are completely disengaged.

2. Industrial truck according to claim 1, wherein for each lifting fork (12) a pull and push bar yoke (21) is pivotally arranged for displacing a pull bar (16) acting on said wheel yoke (15) and herewith arranged to rest against a second damping member (24) by means of a supporting section (23) when the lifting fork is in said lowest position.

3. Industrial truck according to claim 1 or 2, wherein each of said first and second damping members (19, 24) comprises a resilient damping body (19, 24).

4. Device according to claim 3, wherein said second damping member is provided with a second attachment and wherein each of said damping bodies (19, 24) has a mounting bolt (25, 27) for fastening it to the attachment (20, 26).

5. Industrial truck according to claim 1 2, 3 or 4, wherein said first attachment (20) arranged inside the respective lifting fork is attached to at least one of lifting fork opposite sidewalls (12').

6. Industrial truck according to claim 2, 3, 4 or 5 when depending on claim 2, wherein the second damping members (24) for the pull and push yoke (21) are fastened in an attachment (26) at the back portion.

7. Industrial truck according to any of the previous claims, wherein said industrial truck is a low lifting truck

## Patentansprüche

1. Flurförderer mit einem Stück (10) mit einem hinteren Abschnitt (11), der zwei Hubgabeln (12) trägt, die zwischen einer untersten Position und einer angehobenen Position anhebbar und abbsenkbar sind, wobei jede Hubgabel mit mindestens einem nahe zu ihrem freien Ende (13) angeordneten Rad (14) zum Tragen des freien Endes auf einer Basisfläche versehen ist, und wobei jede Hubgabel sowohl ein Radjoch (15) zum Tragen des Rads der Hubgabel als auch Einrichtungen zum mit dem Radjoch (15) gemeinsamen Verschieben des Rads zwischen einer ersten Position, die mit der untersten Position korrespondiert, und einer zweiten Position, die mit der angehobenen Position korrespondiert, aufweist, wobei die Hubgabeln (12) erste elastische Dämpfungselemente (19) aufweisen, von denen jedes durch eine innerhalb der jeweiligen Hubgabel angeordnete erste Aufhängung (20) getragen wird und federnd auf das Hubgabel-Radjoch (15) wirkt, mit einer Federkraft, die im Wesentlichen in der Richtung des freien Endes (13) wirkt, wenn sich die Hubgabel in der untersten Position befindet,
**dadurch gekennzeichnet, dass** die Dämpfungselemente komplett ausgerückt sind, wenn die Hubgabeln die unterste Position verlassen.

2. Flurförderer nach Anspruch 1, bei dem für jede Hubgabel (12) ein Zug- und Druck-Jochstab (21) zum Verschieben einer auf das Radjoch (15) wirkenden Zugstange (16) schwenkbar angeordnet ist, und hiermit zur Abstützung gegen ein zweites Dämpfungselement (24) mittels eines Stützabschnitts (23), wenn sich die Hubgabel in der untersten Position befindet, angeordnet ist.

3. Flurförderer nach Anspruch 1 oder 2, bei dem jedes der ersten und zweiten Dämpfungselemente (19, 24) einen elastischen Dämpfungskörper (19, 24) aufweist.

4. Einrichtung nach Anspruch 3, bei der das zweite Dämpfungselement mit einer zweiten Aufhängung versehen ist, und wobei jeder der Dämpfungskörper (19, 24) einen Befestigungsbolzen (25, 27) zum Befestigen desselben an der Aufhängung (20, 26) aufweist.

5. Flurförderer nach Anspruch 1, 2, 3 oder 4, bei dem die innerhalb der jeweiligen Hubgabel angeordnete erste Aufhängung (20) an mindestens einer einander gegenüberliegenden Hubgabe-Seitenwänden (12') angeordnet ist.

6. Flurförderer nach Anspruch 2, 3, 4 oder 5, wenn abhängig von Anspruch 2, bei dem die zweiten Dämpfungselemente (24) für das Zug- und Druckjoch (21) an einer Aufhängung (26) an dem hinteren Abschnitt befestigt sind.

7. Flurförderer nach einem der vorstehenden Ansprüche, bei dem der Flurförderer ein niedriger Hubwagen ist.

## Revendications

1. Chariot de manutention comprenant une pièce (10) qui comprend une partie arrière (11) portant deux fourches de levage (12) pouvant être relevées et abaissées entre une position la plus basse et une position relevée, dans lequel chaque fourche de levage est dotée d'une roue (14) au moins à proximité de son extrémité libre (13) pour porter ladite extrémité libre sur une surface de base et dans lequel chaque fourche de levage comprend une fourche de roue (15) pour porter ladite roue de la fourche de levage, ainsi que des dispositifs pour déplacer, avec la fourche de roue (15), ladite roue entre une première position correspondant à ladite position la plus basse, et une seconde position correspondant à ladite position relevée, les fourches de levage (12) comprenant des premiers éléments d'amortissement élastiques (19), chacun d'eux étant porté par une première fixation (20) agencée à l'intérieur de la fourche de levage respective et agissant de manière élastique sur la fourche de roue de fourche de levage (15), avec une force de ressort agissant sensiblement dans la direction de ladite extrémité libre (13) lorsque la fourche de levage se trouve dans ladite position la plus basse ;
**caractérisé en ce que**, lorsque les fourches de levage quittent la position la plus basse, les éléments d'amortissement sont totalement désengagés.

2. Chariot de manutention selon la revendication 1, dans lequel, pour chaque fourche de levage (12), une fourche de barre de traction et de poussée (21) est agencée de manière pivotante pour déplacer une barre de traction (16) agissant sur ladite fourche de roue (15), et est agencée de façon à reposer contre un second élément d'amortissement (24) au moyen d'une section de support (23) lorsque la fourche de levage se trouve dans ladite position la plus basse.

3. Chariot de manutention selon la revendication 1 ou 2, dans lequel chacun desdits premier et second éléments d'amortissement (19, 24) comprend un corps d'amortissement élastique (19, 24).

4. Dispositif selon la revendication 3, dans lequel ledit second élément d'amortissement est doté d'une seconde fixation et dans lequel chacun desdits corps d'amortissement (19, 24) présente un boulon de fixation (25, 27) pour le fixer sur la fixation (20, 26).

5. Chariot de manutention selon l'une quelconque des revendications 1 2, 3 ou 4, dans lequel ladite première fixation (20) agencée à l'intérieur de la fourche de levage respective, est fixée sur l'une au moins des parois latérales opposées de la fourche de levage (12').

6. Chariot de manutention selon l'une quelconque des revendications 2, 3, 4 ou 5 si elle dépend de la revendication 2, dans lequel les seconds éléments d'amortissement (24) de la fourche de barre de traction et de poussée (21) sont fixés dans une fixation (26) au niveau de la partie arrière.

7. Chariot de manutention selon l'une quelconque des revendications précédentes, dans lequel ledit chariot de manutention est un transpalette.
